(19)

Europäisches
Patentamt
European
Patent Office
Office européen
des brevets

(11) **EP 4 542 453 A1**

(12) **EUROPEAN PATENT APPLICATION**

(43) Date of publication:
**23.04.2025 Bulletin 2025/17**

(21) Application number: **24198643.9**

(22) Date of filing: **05.09.2024**

(51) International Patent Classification (IPC):
**G06N 5/01** *(2023.01)*        **G06F 17/11** *(2006.01)*

(52) Cooperative Patent Classification (CPC):
**G06N 5/01; G06F 17/11**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.10.2023 JP 2023179311**

(71) Applicant: **FUJITSU LIMITED
Kawasaki-shi, Kanagawa 211-8588 (JP)**

(72) Inventors:
• **KAKUKO, Norihiro
  Kawasaki-shi, Kanagawa, 211-8588 (JP)**
• **PARIZY, Matthieu
  Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **DATA PROCESSING PROGRAM, DATA PROCESSING DEVICE, AND DATA PROCESSING METHOD**

(57)    A data processing program for causing a computer to execute: determining a first difficulty level of each of combinatorial optimization problems by using a result of a first solution search for the combinatorial optimization problems; determining a second difficulty level for each or some of the combinatorial optimization problems by using a problem scale, types of constraint conditions, or a number of the constraint conditions; selecting, from the combinatorial optimization problems, evaluation target problems in descending order of third difficulty level obtained based on the first and second difficulty levels; and performing, for the evaluation target problems, processing of calculating an evaluation value of a candidate value of a parameter of a solution search based on a result of a second solution search using the candidate value, a plurality of times while changing the candidate value, and determining a value of the parameter based on the evaluation value.

FIG. 1

EP 4 542 453 A1

## Description

FIELD

The embodiments discussed herein are related to a data processing program, a data processing device, and a data processing method.

BACKGROUND

There is a method in which, when a solution to a combinatorial optimization problem is searched for, the combinatorial optimization problem is converted into an Ising model representing a behavior of a spin of a magnetic substance. An Ising model is represented by an Ising-type evaluation function that evaluates a solution to a combinatorial optimization problem. An Ising-type evaluation function includes a plurality of state variables and a plurality of weight values. A state of an Ising model is represented by the values of a plurality of state variables. In an Ising-type evaluation function, a state variable is a binary variable that takes the value of 0 or 1 (or -1 or +1). A state variable may be referred to as a bit. An Ising-type evaluation function may also be referred to as an energy function, and the value of an evaluation function may also be referred to as energy of an Ising model.

A device that performs a solution search using such Ising-type evaluation function is referred to as an Ising machine. For example, an Ising machine searches for a combination that minimizes the value of an evaluation function among combinations of the values of state variables included in the evaluation function. In this case, the combination of the values of state variables that minimizes the value of the evaluation function corresponds to the ground state or an optimal solution.

As solution finding methods for acquiring an approximate solution of a combinatorial optimization problem in a practical time, for example, there are a simulated annealing (SA) method and a replica exchange method. In addition, there are a genetic algorithm (GA), a simulated quantum annealing (SQA) method, a tabu search method, and the like. In each of these solution finding methods, predetermined parameters are used for the execution of a solution search. For example, in the SA method, temperature parameters such as the maximum temperature and the minimum temperature are used.

A value of parameter affects the solution finding performance of an Ising machine. To determine the value of parameter used in the SA method, the replica exchange method, or the like, an appropriate value of parameter may be searched for before the actual solution search.

Japanese Laid-open Patent Publication No. 2023-79015 is disclosed as related art.

SUMMARY

TECHNICAL PROBLEM

In a case where a highly versatile value of parameter useful for a solution search of many combinatorial optimization problems is searched for based on a result of a solution search for each combinatorial optimization problem, the search time becomes long. It is conceivable that problems to be used for a search of a value of parameter are randomly selected from a plurality of combinatorial optimization problems for shortening the search time, but there is a possibility that a value of parameter that does not have sufficient versatility is obtained.

In one aspect, an object of the present disclosure is to obtain a highly versatile value of parameter useful for a solution search of many combinatorial optimization problems.

SOLUTION TO PROBLEM

According to an aspect of the embodiments, there is provided a data processing program including instructions which, when executed by a computer, cause the computer to execute processing including: determining a first difficulty level of each of a plurality of combinatorial optimization problems by using a result of a first solution search for the plurality of combinatorial optimization problems; determining a second difficulty level for each of the plurality of combinatorial optimization problems or some combinatorial optimization problems of the plurality of combinatorial optimization problems by using a problem scale, types of constraint conditions, or a number of the constraint conditions; selecting, from the plurality of combinatorial optimization problems, a plurality of evaluation target problems in descending order of third difficulty level obtained based on the first difficulty level and the second difficulty level; and performing, for the plurality of evaluation target problems, processing of calculating an evaluation value of a candidate value of a parameter of a solution search based on a result of a second solution search using the candidate value, a plurality of times while changing the candidate value, and determining a value of the parameter based on the evaluation value.

ADVANTAGEOUS EFFECTS OF INVENTION

In one aspect, a highly versatile value of parameter useful for a solution search of many combinatorial optimization problems may be obtained.

BRIEF DESCRIPTION OF DRAWINGS

FIG. 1 is a diagram illustrating an example of a data processing device of a first embodiment;
FIG. 2 is a diagram for describing a first example of a selection method of evaluation target problems;
FIG. 3 is a diagram for describing a second example of the selection method of evaluation target problems;
FIG. 4 is a diagram for describing a third example of the selection method of evaluation target problems;
FIG. 5 is a diagram illustrating an example of variations in trial difficulty level due to a difference in solution search time;
FIG. 6 is a diagram illustrating a hardware example of a data processing device of a second embodiment;
FIG. 7 is a diagram illustrating a function example of the data processing device;
FIG. 8 is a flowchart illustrating an example of a processing procedure of a data processing method; and
FIG. 9 is a flowchart illustrating a processing procedure of a data processing method of a comparative example.

DESCRIPTION OF EMBODIMENTS

Hereinafter, embodiments of the present disclosure will be described with reference to the drawings.

(First Embodiment)

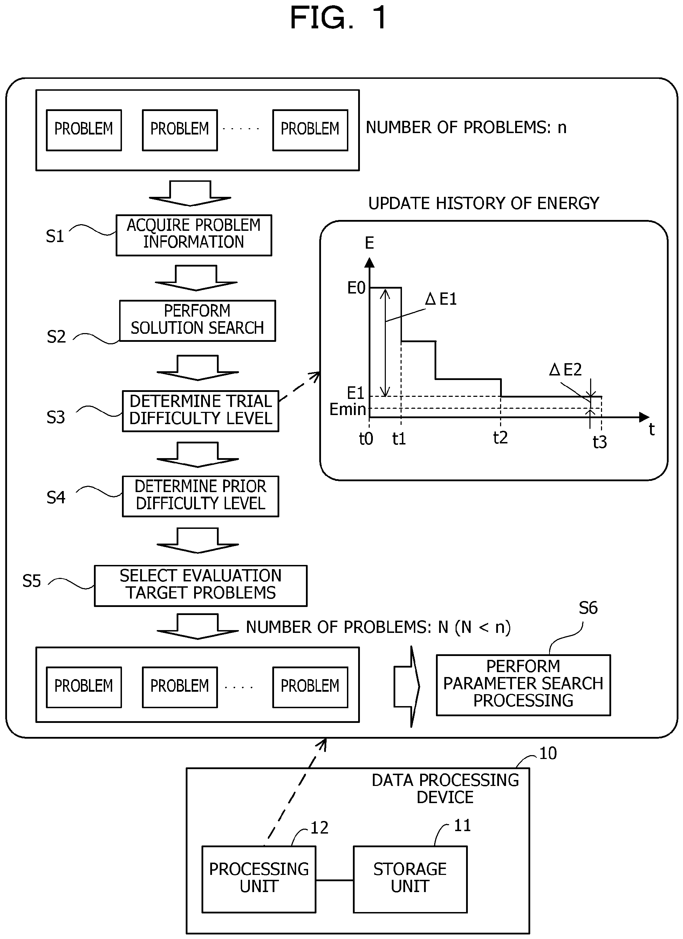

FIG. 1 is a diagram illustrating an example of a data processing device of a first embodiment. A data processing device 10 of the first embodiment performs processing of searching for a value of parameter used for a solution search of a combinatorial optimization problem. The data processing device 10 may be a client device or a server device. The data processing device 10 may be referred to as a computer.

The data processing device 10 of the first embodiment includes a storage unit 11 and a processing unit 12.

The storage unit 11 may include a volatile semiconductor memory such as a random-access memory (RAM), or may include a non-volatile storage such as a hard disk drive (HDD) or a flash memory. The storage unit 11 may include both of a volatile semiconductor memory and a non-volatile storage.

The storage unit 11 stores problem information of a combinatorial optimization problem. A combinatorial optimization problem may be formulated by an Ising-type evaluation function. For example, a combinatorial optimization problem is replaced with a problem of minimizing the value of an Ising-type evaluation function. Hereinafter, an Ising-type evaluation function is referred to as an energy function. The value of an evaluation function is referred to as energy.

For example, an energy function is represented by the following formula (1).

$$E(\boldsymbol{x}) = -\sum_{<i,j>} W_{ij}x_ix_j - \sum_i b_ix_i \qquad (1)$$

State vector x has a plurality of state variables as elements, and represents the state of an Ising model. Formula (1) is an energy function formulated in a quadratic unconstrained binary optimization (QUBO) format. In a case of a problem of maximizing energy, the sign of the energy function just have to be reversed.

The first term on the right side of formula (1) adds up the products of the values of two state variables and a weight coefficient without omission and duplication for all combinations of two state variables that are selectable from all state variables. Subscripts i and j are indices of state variables. $x_i$ is an i-th state variable. $x_j$ is a j-th state variable. $W_{ij}$ is a weight between the i-th state variable and the j-th state variable or a weight coefficient indicating the strength of coupling. $W_{ij} = W_{ji}$, and $W_{ii} = 0$.

The second term on the right side of formula (1) is a sum of the products of a bias for each of all state variables and the value of a state variable. $b_i$ indicates a bias for the i-th state variable. Problem information of a combinatorial optimization problem includes such weight coefficient, bias, and the like included in an energy function as described above.

The storage unit 11 may store calculation conditions for a solution search. For example, in a case where a solution search by the SA method is performed, examples of the calculation conditions include the maximum value of a temperature parameter (hereinafter referred to as the maximum temperature), a temperature parameter change schedule, the minimum value of a temperature parameter (hereinafter referred to as the minimum temperature), a search end condition, and the like. In a case where a solution search by the replica exchange method is performed, examples of the calculation conditions include the maximum temperature, the minimum temperature, the number of replicas, a replica exchange frequency, a search end condition, and the like.

The storage unit 11 stores a result of a solution search (for example, an update history of energy to be described later).

For example, the processing unit 12 may be realized by an electronic circuit such as an application-specific integrated circuit (ASIC) or a field-programmable gate array (FPGA). However, the processing unit 12 may also be realized by a processor such as a central processing unit (CPU), a graphics processing unit (GPU), or a digital signal processor (DSP). For example, the processor executes a program stored in a memory such as a RAM (which may be the storage unit 11). A set of processors may also be referred to as a multiprocessor or simply a "processor". The processing unit 12 may include a processor and an electronic circuit such as an ASIC or an FPGA.

In the following description, an example is given in which the processing unit 12 performs a solution search of a combinatorial optimization problem. However, a solution search unit realized by an FPGA, a GPU, or the like may perform a solution search according to an instruction from the processing unit 12 and return a search result to the processing unit 12. In such case, the solution search unit may be included in the data processing device 10, or may be included in another device that communicates with the data processing device 10.

A solution search is performed by using an energy change amount ($\Delta E_i$) due to a change in $x_i$. $\Delta E_i$ is represented by the following formula (2).

$$\Delta E_i = (2x_i - 1)\left(\sum_j W_{ij}x_j + b_i\right) \qquad (2)$$

When $x_i$ that satisfies $\Delta E_i > 0$ changes, the energy of formula (1) decreases. The processing unit 12 calculates, for each of a plurality of state variables, $\Delta E_i$ due to a change in the value of one state variable among the plurality of state variables. A change in $x_i$ is stochastically accepted in the form of prioritizing a change in which energy decreases.

At this time, in a case of falling into a local solution, it is impossible to escape from the local solution with a steepest descent method. Accordingly, the processing unit 12 uses a Metropolis method or a Gibbs method for determination of a transition probability from a certain state to a next state due to changing of a certain state variable. For example, the processing unit 12 stochastically allows a change in which energy increases as well according to comparison between $\Delta E_i$ and a thermal noise value. A thermal noise value is obtained based on a value of temperature parameter or a random number. As the value of temperature parameter increases, an amplitude of thermal noise value increases. As the amplitude of thermal noise value increases, a state transition with a large amount of increase in energy is more likely to be allowed.

For example, in the SA method, the processing unit 12 reduces the amplitude of thermal noise value by gradually changing the value of temperature parameter from the maximum temperature to the minimum temperature in accordance with a predetermined temperature parameter change schedule, and causes the state of an Ising model to converge to the ground state. As described above, in the SA method, parameters such as the maximum temperature and the minimum temperature are used.

The processing unit 12 performs the following processing to obtain a value of parameter commonly applicable to (useful for) a plurality of combinatorial optimization problems that a user wants to solve. FIG. 1 illustrates an example of a flow of processing performed by the processing unit 12.

Step S1: The processing unit 12 acquires problem information of a plurality of combinatorial optimization problems stored in the storage unit 11. For example, problem information of a combinatorial optimization problem is input to the data processing device 10 by a user and stored in the storage unit 11. In the example of FIG. 1, the number of combinatorial optimization problems (the number of problems) is n. The plurality of combinatorial optimization problems may include a problem for which a theoretical optimal solution is known. In such case, the problem information may include an optimal solution and energy corresponding to the optimal solution.

The problem information may include information representing constraint conditions for a combinatorial optimization problem. If a constraint condition violation occurs when the value of a certain state variable is changed, energy increases. As the information representing constraint conditions, there are the types of constraint conditions (1way1hot constraint, 2way1hot constraint, and the like), the number of constraint conditions, and the like.

Step S2: The processing unit 12 performs a solution search for the n combinatorial optimization problems based on the problem information. For example, in a case where the solution finding method of a solution search is the SA method, the maximum temperature, the minimum temperature, and the like are used as parameters. The values of parameters used for the solution search do not have to be highly versatile. Since the solution search in the processing of step S2 is performed not for the purpose of searching for a good solution, but for the purpose of acquiring information for obtaining a trial difficulty level (such as an update history of energy to be described later), the solution search time may be relatively short. In the solution search, for example, various solution finding methods may be applied such as the SA method and the replica exchange method.

Step S3: The processing unit 12 determines a first difficulty level (hereinafter referred to as a trial difficulty level) of each of the n combinatorial optimization problems by using a result of the solution search.

In FIG. 1, an example of an update history of energy in a solution search is illustrated. The horizontal axis represents time (t), and the vertical axis represents energy (E).

Time t1 represents the time at which a constraint condition is no longer violated. Time t2 represents the last update time at which energy is last updated. Time t3 indicates the end time of solution search.

For example, a trial difficulty level may be determined by using the time from start time t0 of solution search to time t1 (t1 - t0) and the time from start time t0 to time t2 (t2 - t0).

It may be said that, as the time taken until a constraint condition is no longer violated is longer, the combinatorial optimization problem has a higher difficulty level. It may be said that, as the time from the start time to the last update time is longer, the combinatorial optimization problem has a higher difficulty level.

In a case where an initial value of energy (E0) is given, a difference ($\Delta$E1) between E0 and energy at a solution search end time point (E1) may be used for the determination of a trial difficulty level. It may be said that the energy of a combinatorial optimization problem with a smaller $\Delta$E1 is less likely to decrease and the combinatorial optimization problem has a higher difficulty level.

In a case where minimum energy (Emin) that is energy corresponding to a theoretical optimal solution is given, a difference ($\Delta$E2) between Emin and E1 may be used for the determination of a trial difficulty level. It may be said that, as $\Delta$E2 is larger, convergence to Emin is more difficult and the combinatorial optimization problem has a higher difficulty level.

For example, the processing unit 12 may calculate a trial difficulty level by any one of the following formulae (3) and (4), using such result of the solution search as described above.

$$\text{Trial difficulty level} = a1 \times (t2 - t0) + a2 \times (t1 - t0) + a3/\Delta E1 + a4 \times \Delta E2 \quad (3)$$

$$\text{Trial difficulty level} = a \times (t2 - t0) \times (t1 - t0)/\Delta E1 \times \Delta E2 \quad (4)$$

a1 to a4 and a are coefficients representing a weight. For example, the values of a1 to a4 and a are stored in the storage unit 11 in advance. The values of a1 to a4 and a may be input by a user. For the determination of a trial difficulty level, the processing unit 12 may use all or some of (t1 - t0), (t2 - t0), $\Delta$E1, and $\Delta$E2.

A determination method of trial difficulty level is not limited to the above method. For example, the processing unit 12 may determine a trial difficulty level by using table data in which a trial difficulty level corresponding to a combination of satisfied conditions among the four conditions of (t2 - t0) $\leq$ b1, (t1 - t0) $\leq$ b2, $\Delta$E1 $\leq$ b3, and $\Delta$E2 $\leq$ b4 is set. b1 to b4 are predetermined threshold values. The table data may be stored in the storage unit 11.

Step S4: For each of the n combinatorial optimization problems or some combinatorial optimization problems of the n combinatorial optimization problems, the processing unit 12 determines a second difficulty level (hereinafter referred to as a prior difficulty level) by using a problem scale, the types of constraint conditions, or the number of constraint conditions. As the problem scale is larger, there is a higher possibility that the combinatorial optimization problem has a high difficulty level. As the number of types of constraint conditions or the number of constraint conditions increases, the number of states having high energy increases, and thus there is a higher possibility that the combinatorial optimization problem has a high difficulty level.

A problem scale may be represented by the number of state variables (which may also be referred to as the number of bits) included in an energy function. For example, when the number of bits is nb, the number of types of constraint conditions is two, and the respective numbers of the two types of constraint conditions are p1 and p2, for example, the processing unit 12 may calculate a prior difficulty level by any one of the following formulae (5) and (6).

$$\text{Prior difficulty level} = c1 \times nb + c2 \times p1 + c3 \times p2 \quad (5)$$

$$\text{Prior difficulty level} = c \times nb \times p1 \times p2 \quad (6)$$

c1 to c3 and c are coefficients representing a weight. For example, the values of c1 to c3 and c are stored in the storage unit 11 in advance. The values of c1 to c3 and c may be input by a user. For the determination of a prior difficulty level, the processing unit 12 may use all or some of nb, p1, and p2.

A determination method of prior difficulty level is not limited to the above method. For example, the processing unit 12 may determine a prior difficulty level by using table data in which a prior difficulty level corresponding to a combination of satisfied conditions among the three conditions of $nb \le d1$, $p1 \le d2$, and $p2 \le d3$ is set. $d1$ to $d3$ are predetermined threshold values. The table data may be stored in the storage unit 11.

In the case where a prior difficulty level is determined for some combinatorial optimization problems of the n combinatorial optimization problems, ways of selecting a problem for which a prior difficulty level is to be obtained differ depending on the method of selecting N evaluation target problems in the processing of step S5 below.

The reason why not only a trial difficulty level but also a prior difficulty level is used will be described later.

Step S5: The processing unit 12 selects, from the n combinatorial optimization problems, a plurality of (hereinafter, N) evaluation target problems in descending order of third difficulty level obtained based on the trial difficulty level and the prior difficulty level. For example, the value of N is specified by a user. Hereinafter, a third difficulty level is referred to as a difficulty level for target selection.

Hereinafter, examples of a selection method of evaluation target problems will be described.

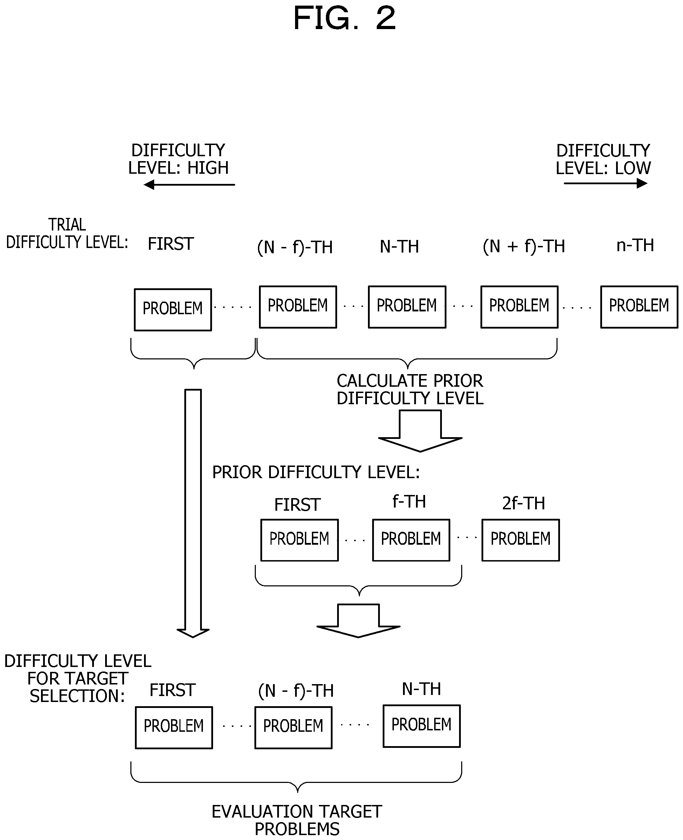

FIG. 2 is a diagram for describing a first example of the selection method of evaluation target problems.

In FIG. 2, n combinatorial optimization problems are arranged in descending order of trial difficulty level. In a case where the selection method of the first example is applied, the processing unit 12 calculates a prior difficulty level for the (N - f)-th to (N + f)-th combinatorial optimization problems, counting from the combinatorial optimization problem with the highest trial difficulty level in order of difficulty level. f may be a fixed value that does not depend on the value of N, or may be a value calculated according to the value of N, such as j% of N. Although not particularly limited, for example, a value of about 10% of N is used as the value of f.

In the processing of step S5, the processing unit 12 uses trial difficulty levels as the top (N - f - 1) difficulty levels for target selection. The processing unit 12 uses prior difficulty levels for the (N - f)-th to (N + f)-th difficulty levels for target selection from the top. The processing unit 12 selects N combinatorial optimization problems as evaluation target problems in descending order of difficulty level for target selection.

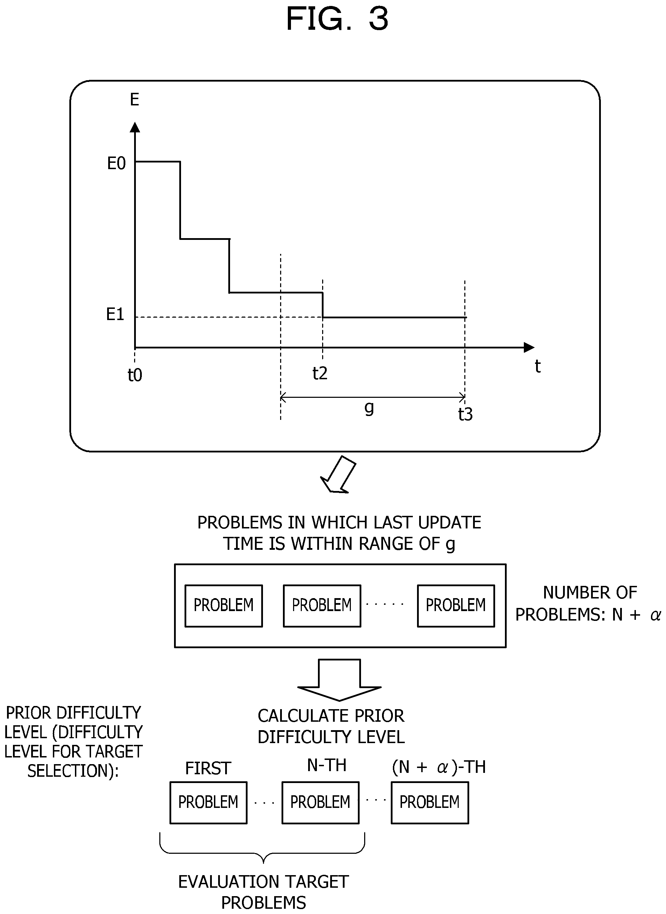

FIG. 3 is a diagram for describing a second example of the selection method of evaluation target problems.

The second example is a selection method that may be applied in a case where the time from start time t0 to last update time of energy t2 (t2 - t0) is used for the determination of a trial difficulty level. In a case where the number of problems in which last update time t2 falls within a range of a predetermined time g (for example, within a range of several seconds) from end time of solution search t3 is N + o, exceeding N, in the processing of step S4, the processing unit 12 calculates a prior difficulty level for the N + $\alpha$ combinatorial optimization problems. The processing unit 12 selects N evaluation target problems in descending order of difficulty level for target selection by using the prior difficulty levels of the N + $\alpha$ combinatorial optimization problems as the difficulty levels for target selection.

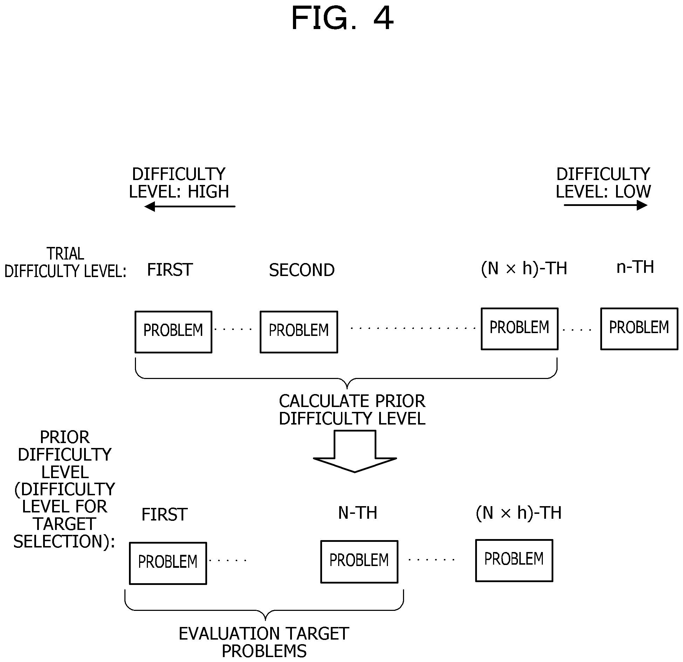

FIG. 4 is a diagram for describing a third example of the selection method of evaluation target problems.

In the third example, in the processing of step S4, the processing unit 12 calculates a prior difficulty level for N $\times$ h combinatorial optimization problems obtained by selecting N $\times$ h problems (up to the (N $\times$ h)-th problem) in order of difficulty level from the combinatorial optimization problem with the highest trial difficulty level. h is an integer of two or larger. The processing unit 12 selects N evaluation target problems in descending order of difficulty level for target selection by using the prior difficulty levels of the N $\times$ h combinatorial optimization problems as the difficulty levels for target selection.

Although, in the above-described three examples, evaluation target problems are selected by using prior difficulty levels after the number of problems of combinatorial optimization problems that are candidates for the evaluation target problems is narrowed down based on trial difficulty levels, the present disclosure is not limited to such method. For example, the processing unit 12 may narrow down the number of problems of combinatorial optimization problems that are candidates for evaluation target problems by using trial difficulty levels, and then calculate (difficulty level for target selection) = (trial difficulty level) + (i $\times$ prior difficulty level) for each of the narrowed down combinatorial optimization problems. The processing unit 12 may select N combinatorial optimization problems as evaluation target problems in descending order of difficulty level for target selection. For example, i is $0 < i \le 1$.

Alternatively, the processing unit 12 may calculate (difficulty level for target selection) = (trial difficulty level) + (i $\times$ prior difficulty level) for all of the n combinatorial optimization problems. The processing unit 12 may select N combinatorial optimization problems as evaluation target problems in descending order of difficulty level for target selection. However, there is a combinatorial optimization problem that is found to be easy when the problem is actually calculated relative to its high prior difficulty level. For this reason, it is preferable that evaluation target problems are selected by using prior difficulty levels after the number of problems of combinatorial optimization problems that are candidates for the evaluation target problems is narrowed down by using trial difficulty levels.

Besides the above-described methods, prior difficulty levels may be determined for a plurality of combinatorial optimization problems in which the difference in last update time is within a predetermined time, and the prior difficulty levels may be used as the difficulty levels for target selection of these combinatorial optimization problems.

Step S6: After N evaluation target problems are selected as described above, parameter search processing is performed. For the N evaluation target problems, the processing unit 12 performs a solution search using a candidate value of a parameter for the solution search. The processing unit 12 acquires a candidate value of a corresponding parameter. For example, the processing unit 12 may acquire a candidate value in a round-robin manner from a predetermined range of candidate values by a grid search. Alternatively, the processing unit 12 may randomly acquire a candidate value from a predetermined range of candidate values by a random search.

For example, in a case where the SA method is used as the solution finding method of a solution search, the value of parameter to be acquired is both or any one of the value of maximum temperature and the value of minimum temperature. In a case where there is a plurality of types of parameters such as the maximum temperature and the minimum temperature, the value of parameter to be acquired is a set of the values of these parameters.

The solution search is performed by using the solution finding method applied in the processing of step S2. For example, when the SA method is applied in the processing of step S2, the SA method is also applied in the processing of step S6. The processing unit 12 calculates an evaluation value of the candidate value based on a result of the solution search using the acquired candidate value of parameter. For example, the evaluation value is calculated by using the minimum value of energy function reached in a certain period of time of solution search and the time taken to reach the minimum value. The processing unit 12 evaluates the candidate value by using the total value of the evaluation value calculated for each combinatorial optimization problem.

The processing unit 12 performs a solution search and evaluation of a candidate value of parameter a plurality of times while changing candidate values. For the N evaluation target problems, the processing unit 12 outputs a candidate value having the largest sum of evaluation values as the value of parameter that is a result of the parameter search processing.

Although illustration is omitted in FIG. 1, the processing unit 12 may then perform a solution search of the plurality of combinatorial optimization problems for which trial difficulty levels have been obtained by using the value of parameter obtained by the parameter search processing, and output a result of the solution search.

As described above, according to the data processing device 10, a first difficulty level (trial difficulty level) of each of a plurality of combinatorial optimization problems is determined by using a result of a first solution search for the plurality of combinatorial optimization problems. For each of the plurality of combinatorial optimization problems or some of the plurality of combinatorial optimization problems, a second difficulty level (prior difficulty level) is determined by using a problem scale, the types of constraint conditions, or the number of constraint conditions. A plurality of evaluation target problems is selected from the plurality of combinatorial optimization problems in descending order of third difficulty level (difficulty level for target selection) obtained based on the first difficulty level and the second difficulty level. Processing of calculating an evaluation value of a candidate value of parameter of a solution search based on a result of a second solution search using the candidate value is performed a plurality of times for the plurality of evaluation target problems while changing candidate values, and the value of parameter is determined based on the evaluation value.

In a case where problems to be used for a parameter search are randomly selected from n combinatorial optimization problems that a user wants to solve for shortening the parameter search time, there is a possibility that a value of parameter that does not have sufficient versatility for the n combinatorial optimization problems is obtained. For example, when the problems to be used for a parameter search are selected in a biased manner to easy problems, there is a possibility that the obtained value of parameter is not useful for difficult problems included in the n combinatorial optimization problems.

Comparatively, according to the data processing device 10, evaluation target problems are selected in descending order of difficulty level for target selection obtained from a trial difficulty level and a prior difficulty level. If a value of parameter useful for more difficult problems is obtained, there is a high possibility that the value is also useful for easy problems. For this reason, according to the data processing device 10, even if the number of problems to be used for a parameter search is reduced, a value of parameter having high versatility for n combinatorial optimization problems may be obtained by selecting evaluation target problems from the n combinatorial optimization problems.

Therefore, according to the data processing device 10, the number of problems to be used for a parameter search may be appropriately reduced, and a highly versatile value of parameter useful for a solution search of many combinatorial optimization problems may be obtained.

The reason why not only a trial difficulty level but also a prior difficulty level is used will be described below.

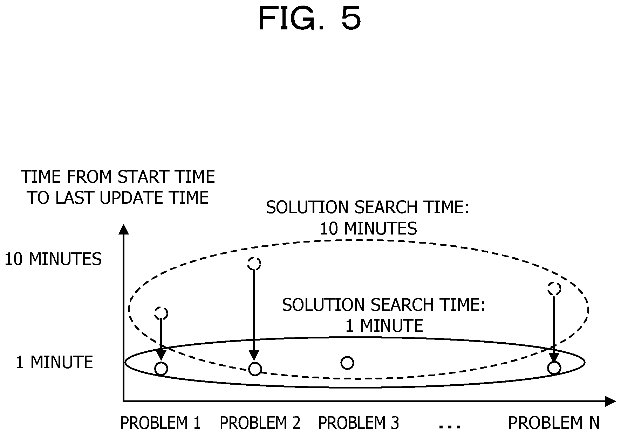

FIG. 5 is a diagram illustrating an example of variations in trial difficulty level due to a difference in solution search time. Time from the start time of a solution search to the last update time is used as the trial difficulty level. The horizontal axis represents N problems of problem 1 to problem N, and the vertical axis represents time from the start time to the last update time. The plotting for a case where the solution search time taken for one problem is 10 minutes is represented by a broken line, and the plotting for a case where the solution search time taken for one problem is one minute is represented by a solid line. The trial difficulty levels of problem 3 are equal between the case where the solution search time is 10 minutes and the case where the solution search time is one minute.

In the case where time from the start time to the last update time is the trial difficulty level, when the solution search time taken for one problem is 10 minutes, as illustrated in FIG. 5, the difference between trial difficulty levels for each problem is relatively large. However, for example, when N = 10000, the total solution search time is 1000 hours or more. For this reason, it is considered that the solution search time for one problem is actually about several tens of seconds to one minute.

However, in a case where the solution search time for one problem is set to be a short time such as one minute, as illustrated in FIG. 5, the trial difficulty levels of many problems reach the upper limit, and a difference in trial difficulty levels for each problem may not be obtained. Accordingly, by using a prior difficulty level together with a trial difficulty level, a difficulty level for target selection more reflecting the actual difficulty level may be obtained.

As illustrated in FIGs. 2 to 4, a plurality of combinatorial optimization problems is narrowed down to some combinatorial optimization problems based on trial difficulty levels, and the time for determining prior difficulty levels may be reduced by determining the prior difficulty levels for the some combinatorial optimization problems.

The above some combinatorial optimization problems may be a predetermined number (f in the example of FIG. 2) of combinatorial optimization problems before and after the combinatorial optimization problems corresponding to the number of problems (N) of evaluation target problems, counting in order of difficulty level from the combinatorial optimization problem with the highest trial difficulty level, out of the plurality of combinatorial optimization problems. In this case, prior difficulty levels are used as the difficulty levels for target selection of the predetermined number of combinatorial optimization problems. The trial difficulty levels of the predetermined number of combinatorial optimization problems are close to an N-th level (close to a boundary of whether a combinatorial optimization problem is selected as an evaluation target problem). Since the difference in trial difficulty level is small as illustrated in FIG. 5, there is a possibility that a combinatorial optimization problem of which trial difficulty level is lower than the N-th level actually has a higher difficulty level than the N-th level. By using a prior difficulty level for such problem, it is expected that evaluation target problems reflecting the actual difficulty level may be selected.

In a case where the trial difficulty levels are determined by using time from the start time of a solution search to the last update time, the above some combinatorial optimization problems may be combinatorial optimization problems in which the last update time is within a predetermined time from the end time of the solution search and the number of which is larger than the number of problems of the plurality of evaluation target problems. In the example of FIG. 3 described above, (N + o) combinatorial optimization problems are the above some combinatorial optimization problems. In this case, prior difficulty levels are used as the difficulty levels for target selection of these combinatorial optimization problems. Since the difference in trial difficulty level is small as illustrated in FIG. 5, there is a possibility that the difficulty levels of these combinatorial optimization problems are actually higher than the N-th level. By using a prior difficulty level for such problem, it is expected that evaluation target problems reflecting the actual difficulty level may be selected.

The above some combinatorial optimization problems may be a plurality of combinatorial optimization problems selected by a number obtained by multiplying the number of problems of a plurality of evaluation target problems by a predetermined value (f in the example of FIG. 4) in order of difficulty level from the combinatorial optimization problem with the highest trial difficulty level among a plurality of combinatorial optimization problems. In this case, prior difficulty levels are used as the difficulty levels for target selection of these combinatorial optimization problems.

Since the difference in trial difficulty level is small as illustrated in FIG. 5, there is a possibility that the difficulty levels of these combinatorial optimization problems are actually higher than the N-th level. By using a prior difficulty level for such problem, it is expected that evaluation target problems reflecting the actual difficulty level may be selected.

(Second Embodiment)

Next, a second embodiment will be described.

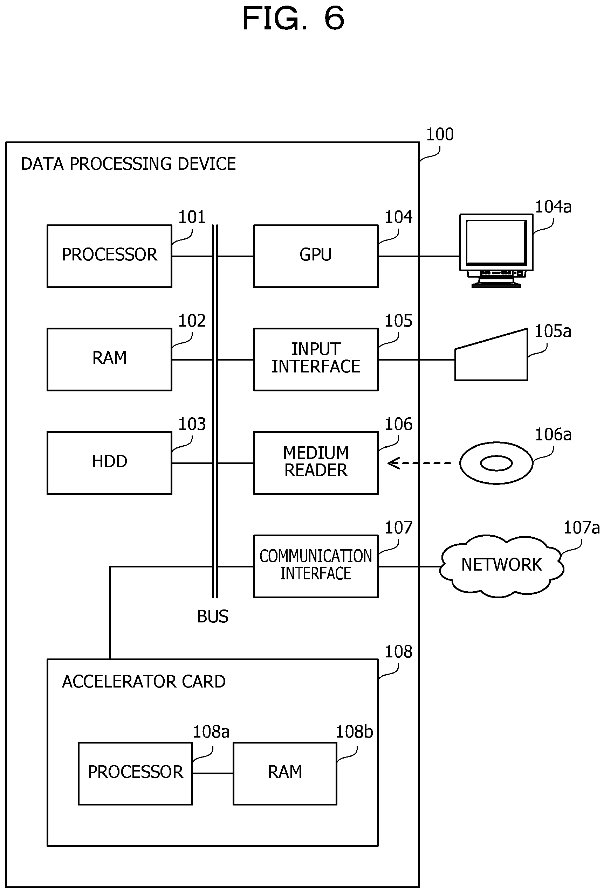

FIG. 6 is a diagram illustrating a hardware example of a data processing device of the second embodiment.

A data processing device 100 performs processing of searching for a value of parameter used for a solution search of a combinatorial optimization problem. The data processing device 100 performs solution finding of a combinatorial optimization problem. The data processing device 100 may be referred to as a computer. The data processing device 100 may be a client device or a server device.

For example, a combinatorial optimization problem is formulated by the energy function of formula (1). The data processing device 100 performs a solution search of a combinatorial optimization problem by executing the SA method or the like based on the energy function.

The data processing device 100 includes a processor 101, a RAM 102, an HDD 103, a GPU 104, an input interface 105, a medium reader 106, a communication interface 107, and an accelerator card 108. These units included in the data processing device 100 are coupled to a bus inside the data processing device 100. The processor 101 corresponds to the processing unit 12 of the first embodiment. The RAM 102 or the HDD 103 corresponds to the storage unit 11 of the first embodiment.

The processor 101 is an arithmetic device that executes instructions of a program. For example, the processor 101 is a CPU. The processor 101 loads at least a part of a program or data stored in the HDD 103 into the RAM 102, and executes the program. The processor 101 may include a plurality of processor cores. The data processing device 100 may include a plurality of processors. The processing to be described below may be executed in parallel by using a plurality of processors or processor cores. A set of a plurality of processors may be referred to as a "multiprocessor" or simply a "processor".

The RAM 102 is a volatile semiconductor memory that temporarily stores a program to be executed by the processor 101 and data to be used for arithmetic operation by the processor 101. The data processing device 100 may include a memory of a type other than the RAM, and may include a plurality of memories.

The HDD 103 is a non-volatile storage device that stores a program of software such as an operating system (OS), middleware, or application software, and data. The data processing device 100 may include other types of storage devices such as a flash memory or a solid-state drive (SSD), and may include a plurality of non-volatile storage devices.

The GPU 104 outputs an image to a display 104a coupled to the data processing device 100 in accordance with an instruction from the processor 101. As the display 104a, an arbitrary type of display such as a cathode ray tube (CRT) display, a liquid crystal display (LCD), a plasma display, or an organic electro-luminescence (OEL) display may be used.

The input interface 105 acquires an input signal from an input device 105a coupled to the data processing device 100, and outputs the input signal to the processor 101. As the input device 105a, a pointing device such as a mouse, a touch panel, a touchpad, or a trackball, a keyboard, a remote controller, a button switch, or the like may be used. A plurality of types of input devices may be coupled to the data processing device 100.

The medium reader 106 is a reading device that reads a program or data recorded on a recording medium 106a. As the recording medium 106a, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 106 copies a program or data read from the recording medium 106a to another recording medium such as the RAM 102 or the HDD 103. For example, the read program is executed by the processor 101. The recording medium 106a may be a portable-type recording medium, and may be used for distribution of a program or data. The recording medium 106a and the HDD 103 may be referred to as a computer-readable recording medium.

The communication interface 107 is coupled to a network 107a, and communicates with another information processing device via the network 107a. The communication interface 107 may be a wired communication interface coupled to a wired communication device such as a switch or a router, or may be a wireless communication interface coupled to a wireless communication device such as a base station or an access point.

The accelerator card 108 is a hardware accelerator that executes the SA method based on an Ising-type energy function. The accelerator card 108 may perform a solution search by a solution finding method other than the SA method. The accelerator card 108 includes a processor 108a and a RAM 108b. For example, the processor 108a is a CPU, a GPU, an FPGA, an ASIC, or the like. The processor 108a executes the SA method in accordance with an instruction from the processor 101, and responds with a solution obtained by the solution search. The RAM 108b is a memory that stores data to be used for processing by the processor 108a. For example, the values of parameters such as the maximum temperature and the minimum temperature are used for the execution of the SA method. The values of parameters are input to the accelerator card 108 by the processor 101, and held in the RAM 108b.

A device that performs solution finding of a combinatorial optimization problem represented by an Ising-type energy function, for example, an Ising problem, such as the accelerator card 108 or the data processing device 100, may be referred to as an Ising machine.

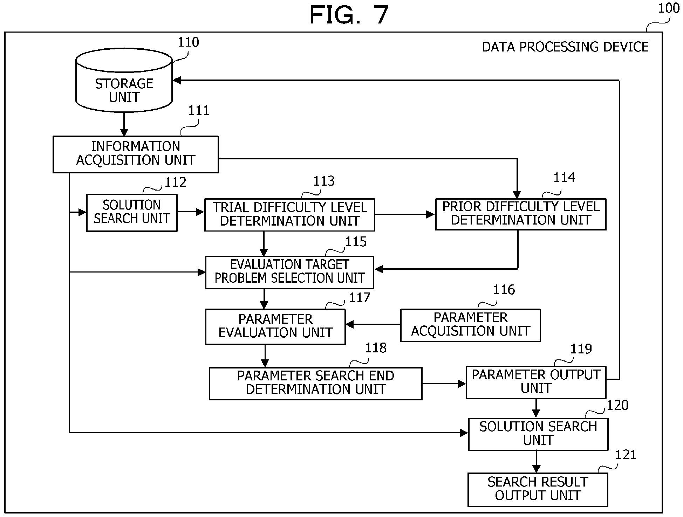

FIG. 7 is a diagram illustrating a function example of the data processing device.

The data processing device 100 includes a storage unit 110, an information acquisition unit 111, a solution search unit 112, a trial difficulty level determination unit 113, a prior difficulty level determination unit 114, and an evaluation target problem selection unit 115. The data processing device 100 includes a parameter acquisition unit 116, a parameter evaluation unit 117, a parameter search end determination unit 118, a parameter output unit 119, a solution search unit 120, and a search result output unit 121.

A storage area of the RAM 102 or the HDD 103 is used for the storage unit 110. The information acquisition unit 111, the solution search unit 112, the trial difficulty level determination unit 113, the prior difficulty level determination unit 114, and the evaluation target problem selection unit 115 are realized by the processor 101 executing a program stored in the RAM 102. The parameter acquisition unit 116, the parameter evaluation unit 117, the parameter search end determination unit 118, the parameter output unit 119, the solution search unit 120, and the search result output unit 121 are also realized by the processor 101 executing a program stored in the RAM 102.

The storage unit 110 stores problem information of n combinatorial optimization problems. For example, problem information of a combinatorial optimization problem includes a weight coefficient, a bias, and the like included in the energy function of formula (1). For example, the problem information is input by the operation of the input device 105a by a user, and stored in the storage unit 110. Alternatively, the problem information may be received from another computer via the network 107a.

The n combinatorial optimization problems may include a problem for which a theoretical optimal solution is known. In such case, the problem information may include an optimal solution and energy corresponding to the optimal solution (minimum energy). The problem information may include information representing constraint conditions for a combinatorial optimization problem. As the information representing constraint conditions, there are the types of constraint conditions (1way1hot constraint, 2way1hot constraint, and the like), the number of constraint conditions, and the like.

The storage unit 110 stores calculation conditions for a solution search. For example, in a case where a solution search by the SA method is performed, the calculation conditions include the values of parameters such as the maximum temperature and the minimum temperature. The values of parameters stored in the storage unit 110 before parameter search processing do not have to be highly versatile values useful for all of the n combinatorial optimization problems.

The information acquisition unit 111 acquires the problem information and calculation conditions stored in the storage unit 110, and inputs the problem information and calculation conditions to the solution search units 112 and 120, the prior difficulty level determination unit 114, and the evaluation target problem selection unit 115.

The solution search unit 112 sets the problem information of a combinatorial optimization problem and the values of parameter representing the calculation conditions in the accelerator card 108, and causes the accelerator card to execute a solution search for a certain period of time. The solution search unit 112 acquires, as a result of the solution search, an update history of energy in the solution search from the RAM 108b of the accelerator card 108. The solution search in the solution search unit 112 is performed for each of the n combinatorial optimization problems. In the solution search, for example, various solution finding methods may be applied such as the SA method and the replica exchange method.

Since the solution search in the solution search unit 112 is performed not for the purpose of searching for a good solution, but for the purpose of acquiring information for obtaining a trial difficulty level, the solution search time may be relatively short. For example, a solution search of about one minute is performed.

The trial difficulty level determination unit 113 determines the trial difficulty level of each of the n combinatorial optimization problems by using the result of the solution search in the solution search unit 112. For example, the trial difficulty level determination unit 113 may calculate a trial difficulty level by any one of formulae (3) and (4) described above. For the determination of a trial difficulty level, the trial difficulty level determination unit 113 may use all or some of (t1 - t0), (t2 - t0), $\Delta E1$, and $\Delta E2$ in formulae (3) and (4). A method of calculating a trial difficulty level is not limited to the above method.

For each of the n combinatorial optimization problems or some of the n combinatorial optimization problems, the prior difficulty level determination unit 114 determines a prior difficulty level. For example, the prior difficulty level determination unit 114 may calculate a prior difficulty level by any one of formulae (5) and (6) described above. For the determination of a prior difficulty level, the processing unit 12 may use all or some of nb, p1, and p2 in formulae (5) and (6). However, formulae (5) and (6) may be changed according to the number of types of constraint conditions. A determination method of prior difficulty level is not limited to the above method.

In the case where a prior difficulty level is determined for some of the n combinatorial optimization problems, ways of selecting a problem for which a prior difficulty level is to be obtained differ depending on the method by which the evaluation target problem selection unit 115 selects N evaluation target problems.

The evaluation target problem selection unit 115 selects, from the n combinatorial optimization problems, N evaluation target problems in descending order of difficulty level for target selection obtained based on the trial difficulty level and the prior difficulty level. For example, the value of N is input by the operation of the input device 105a by a user.

For example, any one of the methods illustrated in FIGs. 2 to 4 may be used as a selection method of evaluation target problems. However, a selection method of evaluation target problems is not limited to the methods illustrated in FIGs. 2 to 4. For example, the evaluation target problem selection unit 115 may narrow down the number of problems of combinatorial optimization problems that are candidates for evaluation target problems by using trial difficulty levels, and then calculate (difficulty level for target selection) = (trial difficulty level) + (i $\times$ prior difficulty level) for each of the narrowed down combinatorial optimization problems. The evaluation target problem selection unit 115 may select N combinatorial optimization problems as evaluation target problems in descending order of difficulty level for target selection. For example, i is $0 < i \leq 1$.

Alternatively, the evaluation target problem selection unit 115 may calculate (difficulty level for target selection) = (trial difficulty level) + (i $\times$ prior difficulty level) for all of the n combinatorial optimization problems. The evaluation target problem selection unit 115 may select N combinatorial optimization problems as evaluation target problems in descending order of difficulty level for target selection. The evaluation target problem selection unit 115 may determine prior difficulty levels for a plurality of combinatorial optimization problems in which the difference in last update time is within a predetermined time, and use the prior difficulty levels as the difficulty levels for target selection of these combinatorial optimization problems.

Parameter search processing is performed by the parameter acquisition unit 116, the parameter evaluation unit 117, and the parameter search end determination unit 118.

The parameter acquisition unit 116 acquires a candidate value of a parameter used for a solution search. For example, the parameter acquisition unit 116 may acquire a candidate value in a round-robin manner from a predetermined range of candidate values by a grid search. Alternatively, the parameter acquisition unit 116 may randomly acquire a candidate value from a predetermined range of candidate values by a random search. For example, in a case where the SA method is used as the solution finding method of a solution search, the candidate value of parameter to be acquired is both or any one of the value of maximum temperature and the value of minimum temperature. In a case where there is a plurality of types of parameters such as the maximum temperature and the minimum temperature, the candidate value of parameter to be acquired is a set of the candidate values of these parameters.

The parameter evaluation unit 117 sets the problem information of the selected N evaluation target problems and the candidate value of parameter acquired by the parameter acquisition unit 116 in the accelerator card 108, and causes the accelerator card to execute a solution search. The solution finding method in the solution search is the same as the solution finding method applied in the solution search unit 112. The parameter evaluation unit 117 acquires, as a result of the solution search, an update history of energy from the RAM 108b of the accelerator card 108. The parameter evaluation unit 117 obtains an evaluation value representing evaluation of the candidate value of parameter based on the update history of energy. For example, the evaluation value may be calculated by using the minimum value of energy reached in a certain period of time of solution search and the time taken to reach the minimum value. The minimum value of energy or the time taken to reach the minimum value may be set as the evaluation value.

The parameter search end determination unit 118 determines whether an end condition of parameter search is satisfied. For example, the parameter search end determination unit 118 determines that the end condition is satisfied in a case where the candidate value having the largest sum of evaluation values obtained for each evaluation target problem (highest evaluation) does not change even after different candidate values are acquired a predetermined number of times.

The parameter output unit 119 outputs the candidate value having the largest sum of evaluation values (hereinafter referred to as the best parameter value). The best parameter value may be stored in the storage unit 110.

The solution search unit 120 sets the problem information of n combinatorial optimization problems and the best parameter value in the accelerator card 108, and causes the accelerator card to execute a solution search. The solution finding method in the solution search is the same as the solution finding method applied in the solution search unit 112. The solution search unit 120 acquires a search result of the solution search from the accelerator card 108. The solution search unit 120 outputs the acquired search result to the search result output unit 121. For example, the search result includes the minimum energy obtained within a predetermined period and the value of each state variable corresponding to the energy.

The search result output unit 121 outputs the search result acquired from the solution search unit 120. For example, the search result output unit 121 may cause the display 104a to display an image representing the solution for each of the n combinatorial optimization problems, or may transmit data of the solution to another computer via the network 107a.

Although the solution search units 112 and 120 and the parameter evaluation unit 117 cause the accelerator card 108 to execute a solution search, the function of the solution search may be realized by the processor 101 executing a program. In this case, the data processing device 100 does not have to include the accelerator card 108.

Next, an example of a processing procedure of a data processing method by the data processing device 100 will be described.

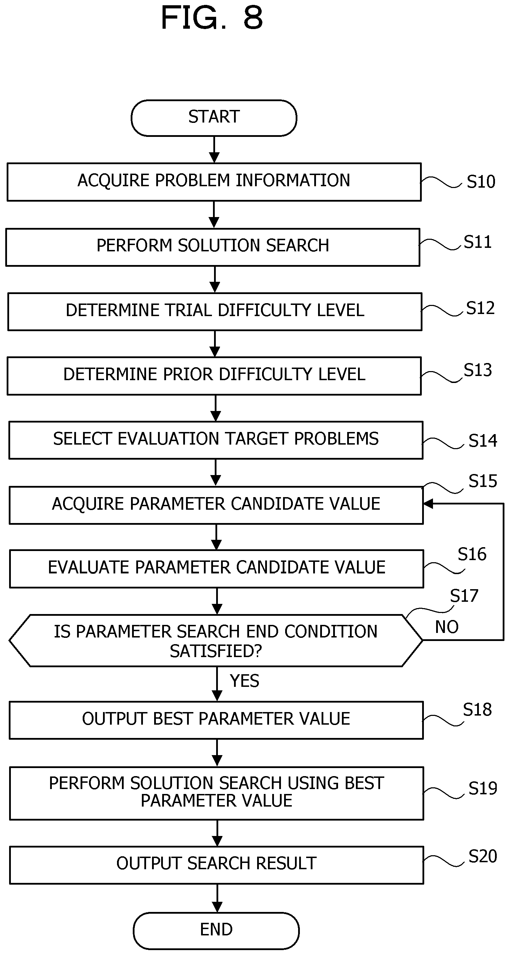

FIG. 8 is a flowchart illustrating an example of the processing procedure of the data processing method.

Step S10: The information acquisition unit 111 acquires the problem information and calculation conditions stored in the storage unit 110, and inputs the problem information and calculation conditions to the solution search units 112 and 120, the prior difficulty level determination unit 114, and the evaluation target problem selection unit 115.

Step S11: The solution search unit 112 sets the problem information of a combinatorial optimization problem and the values of parameter representing the calculation conditions in the accelerator card 108, and causes the accelerator card to execute a solution search for a certain period of time. The solution search unit 112 acquires, as a result of the solution search, an update history of energy in the solution search from the RAM 108b of the accelerator card 108.

Step S12: The trial difficulty level determination unit 113 determines the trial difficulty level of each of the n combinatorial optimization problems by using the result of the solution search in the solution search unit 112.

Step S13: For each of the n combinatorial optimization problems or some of the n combinatorial optimization problems, the prior difficulty level determination unit 114 determines a prior difficulty level by using a problem scale, the types of constraint conditions, or the number of constraint conditions.

Step S14: The evaluation target problem selection unit 115 selects, from the n combinatorial optimization problems, N evaluation target problems in descending order of difficulty level for target selection obtained as described above based on the trial difficulty level and the prior difficulty level.

Step S15: The parameter acquisition unit 116 acquires a candidate value of a parameter used for a solution search.

Step S16: Evaluation of the candidate value of parameter is performed. In the processing of step S16, the parameter evaluation unit 117 sets the problem information of the selected N evaluation target problems and the candidate value of parameter acquired by the parameter acquisition unit 116 in the accelerator card 108, and causes the accelerator card to execute a solution search. The parameter evaluation unit 117 acquires, as a result of the solution search, an update history of energy from the RAM 108b of the accelerator card 108. The parameter evaluation unit 117 obtains an evaluation value representing evaluation of the candidate value of parameter based on the update history of energy.

Step S17: The parameter search end determination unit 118 determines whether an end condition of parameter search is satisfied. When the parameter search end determination unit 118 has determined that the end condition of parameter search is satisfied, the processing of step S18 is performed, and when it has determined that the end condition of parameter search is not satisfied, the processing from step S15 is repeated.

Step S18: The parameter output unit 119 outputs the candidate value having the largest sum of evaluation values as the best parameter value.

Step S19: The solution search unit 120 sets the problem information of n combinatorial optimization problems and the best parameter value in the accelerator card 108, and causes the accelerator card to execute a solution search. The solution search unit 120 acquires a search result of the solution search from the accelerator card 108. The solution search unit 120 outputs the acquired search result to the search result output unit 121.

Step S20: The search result output unit 121 outputs the search result acquired from the solution search unit 120. Accordingly, the processing of the data processing method by the data processing device 100 ends.

Next, a comparative example will be described. The comparative example is a case where the functions of the solution search unit 112, the trial difficulty level determination unit 113, the prior difficulty level determination unit 114, and the evaluation target problem selection unit 115 are not used.

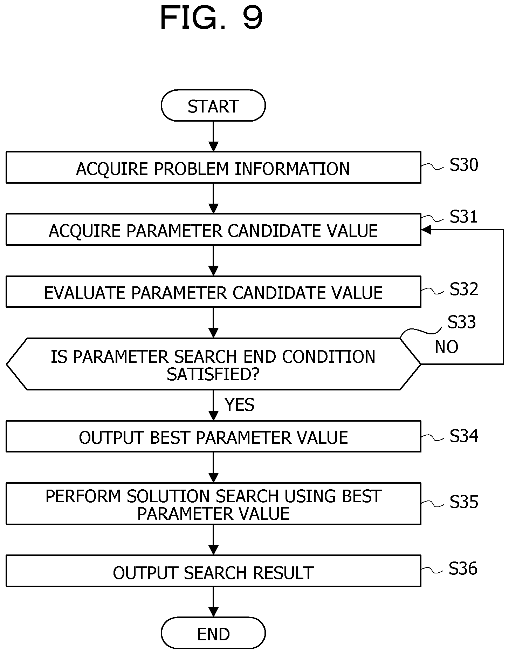

FIG. 9 is a flowchart illustrating a processing procedure of a data processing method of the comparative example.

Step S30: Problem information of n combinatorial optimization problems and calculation conditions are acquired.

Step S31: A candidate value of a parameter used for a solution search is acquired.

Step S32: Evaluation of the candidate value of parameter is performed. In the processing of step S32, a solution search is executed based on the problem information of the n combinatorial optimization problems and the candidate value of parameter. An evaluation value of the candidate value of parameter is obtained based on an update history of energy obtained by the solution search.

Step S33: Whether an end condition of parameter search is satisfied is determined. When it is determined that the end condition of parameter search is satisfied, the processing of step S34 is performed, and when it is determined that the end condition of parameter search is not satisfied, the processing from step S31 is repeated.

Step S34: The candidate value having the largest sum of evaluation values is output as the best parameter value.

Step S35: A solution search for each of the n combinatorial optimization problems is executed based on the problem information and the best parameter value.

Step S36: A search result of the solution search is output, and the processing ends.

In the data processing method of the comparative example, a parameter search accompanied by a solution search is performed by using the problem information of n combinatorial optimization problems that a user wants to solve. In this case, since the number of times a solution search is performed increases as the value of n (the number of problems) increases, the time taken until a highly versatile value of parameter is obtained increases. For example, there is a case where it takes about 100 hours for a parameter search using several tens of combinatorial optimization problems. In an actual business negotiation, there is a case where the number of problems of combinatorial optimization problems that a user wants to solve exceeds 10,000, and it is not realistic to set all problems as evaluation target problems to be used for a parameter search.

In a case where problems to be used for a parameter search are randomly selected from n combinatorial optimization problems that a user wants to solve for shortening the time taken for the parameter search, there is a possibility that a value of parameter that does not have sufficient versatility for the n combinatorial optimization problems is obtained.

Comparatively, according to the data processing device 100, evaluation target problems are selected in descending order of difficulty level for target selection obtained from a trial difficulty level and a prior difficulty level. If a value of parameter useful for more difficult problems is obtained, there is a high possibility that the value is also useful for easy problems. For this reason, according to the data processing device 100, even if the number of problems to be used for a parameter search is reduced, a value of parameter having high versatility for n combinatorial optimization problems may be obtained by selecting evaluation target problems from the n combinatorial optimization problems.

Therefore, according to the data processing device 100, the number of problems to be used for a parameter search may be appropriately reduced, and a highly versatile value of parameter useful for a solution search of many combinatorial optimization problems may be obtained.

The data processing device 100 sets the problem information and the best parameter value in the Ising machine (the accelerator card 108 in the above example), and executes a solution search for each of the n combinatorial optimization problems. Since the best parameter value has high versatility for the n combinatorial optimization problems, it may be expected that a good solution is obtained in a short time.

(Experimental Example)

Hereinafter, an experimental example is given.

1700 combinatorial optimization problems related to automotive production were used as the n combinatorial optimization problems. A parameter search was performed by the following two methods.

(Method 1) Method of selecting evaluation target problems using only trial difficulty levels and not using prior difficulty levels

(Method 2) Method of selecting evaluation target problems by using both of trial difficulty levels and prior difficulty levels as in the data processing device 100

Trial difficulty level in the experimental example is time from the start time to the last update time obtained by executing a solution search for 60 seconds using a default value of parameter (for example, t2 - t0 in FIG. 1). Prior difficulty level used in method 2 of the experimental example is the number of state variables (the number of bits) included in an energy function. A prior difficulty level was obtained for a plurality of combinatorial optimization problems in which the difference in last update time is within one second. For these combinatorial optimization problems, prior difficulty levels were used as the difficulty levels for target selection. The number of problems (N) of evaluation target problems is 10.

In method 1, the top 10 problems of trial difficulty level of the 1700 combinatorial optimization problems were selected as evaluation target problems. In method 2, the top 10 problems of difficulty level for target selection obtained by using trial difficulty levels and prior difficulty levels of the 1700 combinatorial optimization problems were selected as evaluation target problems.

A parameter search was performed for the 10 evaluation target problems selected in each method. A solution search of 10 seconds was performed for the above 1700 combinatorial optimization problems by using the obtained parameter value. For each method, the following result was obtained.

Method 1: Total lowest energy obtained by solution search for 1700 problems = 58541

Method 2: Total lowest energy obtained by solution search for 1700 problems = 53324

The total lowest energy obtained when a similar solution search was performed using the default value of parameter was 95953. For this reason, in method 1, the total value of energy is lower by 39% than that in the case where the default value of parameter is used. In method 2, the total value of energy is lower than that in method 1 by 8.9%.

For this reason, it has been confirmed that a value of parameter with higher versatility (useful for the 1700 combinatorial optimization problems) is obtained by using both trial difficulty levels and prior difficulty levels.

The information processing of the first embodiment may be achieved by causing the processing unit 12 to execute a program. The information processing of the second embodiment may be achieved by causing the processor 101 to execute a program. The program may be recorded in the computer-readable recording medium 106a.

For example, the program may be circulated by distributing the recording medium 106a in which the program is recorded. The program may be stored in another computer, and the program may be distributed via a network. For example, a computer may store (install), in a storage device such as the RAM 102 or the HDD 103, the program recorded in the recording medium 106a or the program received from the other computer, and read the program from the storage device and execute the program.

Although an aspect of the program, the data processing method, and the data processing device of the present disclosure has been described above based on the embodiments, these are merely examples and the present disclosure is not limited to the above description.

**Claims**

1.  A data processing program comprising instructions which, when executed by a computer, cause the computer to execute processing comprising:

    determining a first difficulty level of each of a plurality of combinatorial optimization problems by using a result of a first solution search for the plurality of combinatorial optimization problems;
    determining a second difficulty level for each of the plurality of combinatorial optimization problems or some combinatorial optimization problems of the plurality of combinatorial optimization problems by using a problem scale, types of constraint conditions, or a number of the constraint conditions;
    selecting, from the plurality of combinatorial optimization problems, a plurality of evaluation target problems in descending order of third difficulty level obtained based on the first difficulty level and the second difficulty level; and
    performing, for the plurality of evaluation target problems, processing of calculating an evaluation value of a candidate value of a parameter of a solution search based on a result of a second solution search using the candidate value, a plurality of times while changing the candidate value, and determining a value of the parameter based on the evaluation value.

2. The data processing program according to claim 1, wherein

the plurality of combinatorial optimization problems is narrowed down to the some combinatorial optimization problems based on the first difficulty level, and
the second difficulty level is determined for the some combinatorial optimization problems.

3. The data processing program according to claim 1, wherein

the some combinatorial optimization problems are a predetermined number of combinatorial optimization problems before and after combinatorial optimization problems that correspond to a number of problems of the plurality of evaluation target problems, counting in order of difficulty level from a combinatorial optimization problem of which the first difficulty level is highest, out of the plurality of combinatorial optimization problems, and
the second difficulty level is used as the third difficulty level of the predetermined number of combinatorial optimization problems.

4. The data processing program according to claim 1, wherein

the first difficulty level is determined in the first solution search by using time from start time of the first solution search to last update time at which a value of an evaluation function of each of the plurality of combinatorial optimization problems is last updated,
the some combinatorial optimization problems are a plurality of first combinatorial optimization problems in which the last update time is within a predetermined time from end time of the first solution search and a number of which is larger than a number of problems of the plurality of evaluation target problems, out of the plurality of combinatorial optimization problems, and
the second difficulty level is used as the third difficulty level of the plurality of first combinatorial optimization problems.

5. The data processing program according to claim 1, wherein

the some combinatorial optimization problems are a plurality of second combinatorial optimization problems selected by a number obtained by multiplying a number of problems of the plurality of evaluation target problems by a predetermined value in order of difficulty level from a combinatorial optimization problem of which the first difficulty level is highest among the plurality of combinatorial optimization problems, and
the second difficulty level is used as the third difficulty level of the plurality of second combinatorial optimization problems.

6. The data processing program according to claim 1, wherein
the first difficulty level is determined based on an update history of a value of an evaluation function of each of the plurality of combinatorial optimization problems in the first solution search.

7. The data processing program according to claim 1, the processing further comprising setting a value of the parameter determined based on the evaluation value and problem information of the plurality of combinatorial optimization problems in an Ising machine, and causing the Ising machine to perform a third solution search for the plurality of combinatorial optimization problems.

8. A data processing apparatus comprising:

a storage unit configured to store a result of a first solution search for the plurality of combinatorial optimization problems;
a processing unit configured to perform processing including:

determining a first difficulty level of each of a plurality of combinatorial optimization problems by using the result of the first solution search;
determining a second difficulty level for each of the plurality of combinatorial optimization problems or some combinatorial optimization problems of the plurality of combinatorial optimization problems by using a problem scale, types of constraint conditions, or a number of the constraint conditions;

selecting, from the plurality of combinatorial optimization problems, a plurality of evaluation target problems in descending order of third difficulty level obtained based on the first difficulty level and the second difficulty level; and

performing, for the plurality of evaluation target problems, processing of calculating an evaluation value of a candidate value of a parameter of a solution search based on a result of a second solution search using the candidate value, a plurality of times while changing the candidate value, and determining a value of the parameter based on the evaluation value.

9. A data processing method implemented by a computer, comprising:

determining a first difficulty level of each of a plurality of combinatorial optimization problems by using a result of a first solution search for the plurality of combinatorial optimization problems;

determining a second difficulty level for each of the plurality of combinatorial optimization problems or some combinatorial optimization problems of the plurality of combinatorial optimization problems by using a problem scale, types of constraint conditions, or a number of the constraint conditions;

selecting, from the plurality of combinatorial optimization problems, a plurality of evaluation target problems in descending order of third difficulty level obtained based on the first difficulty level and the second difficulty level; and

performing, for the plurality of evaluation target problems, processing of calculating an evaluation value of a candidate value of a parameter of a solution search based on a result of a second solution search using the candidate value, a plurality of times while changing the candidate value, and determining a value of the parameter based on the evaluation value.

# FIG. 1

| PROBLEM | PROBLEM | · · · · | PROBLEM | NUMBER OF PROBLEMS: n |

S1 — ACQUIRE PROBLEM INFORMATION

UPDATE HISTORY OF ENERGY

S2 — PERFORM SOLUTION SEARCH

S3 — DETERMINE TRIAL DIFFICULTY LEVEL

E

E0

$\Delta$E1

$\Delta$E2

E1
Emin

t0   t1        t2      t3   t

S4 — DETERMINE PRIOR DIFFICULTY LEVEL

S5 — SELECT EVALUATION TARGET PROBLEMS

NUMBER OF PROBLEMS: N (N < n)

| PROBLEM | PROBLEM | · · · · | PROBLEM |

S6

PERFORM PARAMETER SEARCH PROCESSING

10

DATA PROCESSING DEVICE

12                    11

PROCESSING UNIT          STORAGE UNIT

# FIG. 2

DIFFICULTY
LEVEL: HIGH
←

DIFFICULTY
LEVEL: LOW
→

TRIAL
DIFFICULTY LEVEL:   FIRST        (N - f)-TH      N-TH       (N + f)-TH       n-TH

| PROBLEM | ···· | PROBLEM | ··· | PROBLEM | ··· | PROBLEM | ···· | PROBLEM |

CALCULATE PRIOR
DIFFICULTY LEVEL

⇩

PRIOR DIFFICULTY LEVEL:

FIRST          f-TH          2f-TH

| PROBLEM | ··· | PROBLEM | ··· | PROBLEM |

⇩

DIFFICULTY LEVEL
FOR TARGET
SELECTION:      FIRST        (N - f)-TH        N-TH

| PROBLEM | ···· | PROBLEM | ···· | PROBLEM |

EVALUATION TARGET
PROBLEMS

# FIG. 3

PROBLEMS IN WHICH LAST UPDATE
TIME IS WITHIN RANGE OF g

| PROBLEM | PROBLEM | · · · · · | PROBLEM |

NUMBER OF
PROBLEMS: N + $\alpha$

CALCULATE PRIOR
DIFFICULTY LEVEL

PRIOR DIFFICULTY
LEVEL (DIFFICULTY
LEVEL FOR TARGET
SELECTION):

FIRST          N-TH          (N + $\alpha$)-TH

| PROBLEM | · · · | PROBLEM | · · · | PROBLEM |

EVALUATION TARGET
PROBLEMS

# FIG. 4

DIFFICULTY
LEVEL: HIGH

DIFFICULTY
LEVEL: LOW

TRIAL
DIFFICULTY LEVEL:   FIRST          SECOND                    (N × h)-TH          n-TH

PROBLEM · · · · · PROBLEM · · · · · · · · · · · · · · PROBLEM · · · · PROBLEM

CALCULATE PRIOR
DIFFICULTY LEVEL

PRIOR
DIFFICULTY
LEVEL
(DIFFICULTY
LEVEL FOR
TARGET
SELECTION):      FIRST                    N-TH            (N × h)-TH

PROBLEM · · · · PROBLEM · · · · · PROBLEM

EVALUATION TARGET
PROBLEMS

# FIG. 5

# FIG. 6

100

DATA PROCESSING DEVICE

101
PROCESSOR

104
GPU

104a

102
RAM

105
INPUT INTERFACE

105a

103
HDD

106
MEDIUM READER

106a

107
COMMUNICATION INTERFACE

107a
NETWORK

BUS

108
ACCELERATOR CARD

108a
PROCESSOR

108b
RAM

# FIG. 7

DATA PROCESSING DEVICE — 100

- 110 STORAGE UNIT
- 111 INFORMATION ACQUISITION UNIT
- 112 SOLUTION SEARCH UNIT
- 113 TRIAL DIFFICULTY LEVEL DETERMINATION UNIT
- 114 PRIOR DIFFICULTY LEVEL DETERMINATION UNIT
- 115 EVALUATION TARGET PROBLEM SELECTION UNIT
- 116 PARAMETER ACQUISITION UNIT
- 117 PARAMETER EVALUATION UNIT
- 118 PARAMETER SEARCH END DETERMINATION UNIT
- 119 PARAMETER OUTPUT UNIT
- 120 SOLUTION SEARCH UNIT
- 121 SEARCH RESULT OUTPUT UNIT

# FIG. 8

```
        ┌─────────────┐
        │    START    │
        └─────────────┘
               │
               ▼
┌──────────────────────────────────┐
│   ACQUIRE PROBLEM INFORMATION     │── S10
└──────────────────────────────────┘
               │
               ▼
┌──────────────────────────────────┐
│      PERFORM SOLUTION SEARCH      │── S11
└──────────────────────────────────┘
               │
               ▼
┌──────────────────────────────────┐
│  DETERMINE TRIAL DIFFICULTY LEVEL │── S12
└──────────────────────────────────┘
               │
               ▼
┌──────────────────────────────────┐
│  DETERMINE PRIOR DIFFICULTY LEVEL │── S13
└──────────────────────────────────┘
               │
               ▼
┌──────────────────────────────────┐
│  SELECT EVALUATION TARGET PROBLEMS│── S14
└──────────────────────────────────┘
               │
               ▼
┌──────────────────────────────────┐
│  ACQUIRE PARAMETER CANDIDATE VALUE│── S15  ◄───┐
└──────────────────────────────────┘            │
               │                                 │
               ▼                                 │
┌──────────────────────────────────┐            │
│ EVALUATE PARAMETER CANDIDATE VALUE│── S16      │
└──────────────────────────────────┘            │
               │                                 │
               ▼                           S17   │
      ╱─────────────────────────╲               │
     ╱ IS PARAMETER SEARCH END    ╲──── NO ──────┘
     ╲ CONDITION SATISFIED?       ╱
      ╲─────────────────────────╱
               │ YES
               ▼
┌──────────────────────────────────┐
│     OUTPUT BEST PARAMETER VALUE   │── S18
└──────────────────────────────────┘
               │
               ▼
┌──────────────────────────────────┐
│ PERFORM SOLUTION SEARCH USING BEST│── S19
│          PARAMETER VALUE          │
└──────────────────────────────────┘
               │
               ▼
┌──────────────────────────────────┐
│       OUTPUT SEARCH RESULT        │── S20
└──────────────────────────────────┘
               │
               ▼
        ┌─────────────┐
        │     END     │
        └─────────────┘
```

# FIG. 9

```
                    ┌─────────────┐
                    │    START    │
                    └─────────────┘
                           │
                           ▼
        ┌─────────────────────────────────────┐
        │    ACQUIRE PROBLEM INFORMATION       │ ～ S30
        └─────────────────────────────────────┘
                           │
                           ▼
        ┌─────────────────────────────────────┐      ～ S31
        │  ACQUIRE PARAMETER CANDIDATE VALUE   │◄───────┐
        └─────────────────────────────────────┘        │
                           │                            │
                           ▼                            │
        ┌─────────────────────────────────────┐        │
        │  EVALUATE PARAMETER CANDIDATE VALUE  │ ～ S32  │
        └─────────────────────────────────────┘        │
                           │                S33         │
                           ▼               NO           │
        ╱─────────────────────────────────────╲────────┘
       ╱  IS PARAMETER SEARCH END CONDITION     ╲
       ╲            SATISFIED?                   ╱
        ╲─────────────────────────────────────╱
                           │ YES
                           ▼
        ┌─────────────────────────────────────┐
        │      OUTPUT BEST PARAMETER VALUE     │ ～ S34
        └─────────────────────────────────────┘
                           │
                           ▼
        ┌─────────────────────────────────────┐
        │  PERFORM SOLUTION SEARCH USING BEST  │ ～ S35
        │           PARAMETER VALUE            │
        └─────────────────────────────────────┘
                           │
                           ▼
        ┌─────────────────────────────────────┐
        │        OUTPUT SEARCH RESULT          │ ～ S36
        └─────────────────────────────────────┘
                           │
                           ▼
                    ┌─────────────┐
                    │     END     │
                    └─────────────┘
```

Europäisches
Patentamt
European
Patent Office
Office européen
des brevets

# EUROPEAN SEARCH REPORT

**Application Number**

EP 24 19 8643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/248507 A1 (JIPPO HIDEYUKI [JP]) 12 August 2021 (2021-08-12) * claims 1, 5, 6, 8 * * paragraph [0103] - paragraph [0104] * * paragraph [0156] * * paragraph [0190] * * paragraph [0366] * | 1-9 | INV. G06N5/01 G06F17/11 |
| X | MATTHIEU PARIZY ET AL: "Fast Hyperparameter Tuning for Ising Machines", ARXIV.ORG, CORNELL UNIVERSITY LIBRARY, 201 OLIN LIBRARY CORNELL UNIVERSITY ITHACA, NY 14853, 29 November 2022 (2022-11-29), XP091381138, * abstract; figure 2 * * section 5 * | 1-9 | |

TECHNICAL FIELDS
SEARCHED      (IPC)

G06N
G06F

The present search report has been drawn up for all claims

| Place of search | Date of completion of the search | Examiner |
|---|---|---|
| The Hague | 30 January 2025 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 542 453 A1**

## ANNEX TO THE EUROPEAN SEARCH REPORT
## ON EUROPEAN PATENT APPLICATION NO.

EP 24 19 8643

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | | Publication date |
|---|---|---|---|---|
| US 2021248507 A1 | 12-08-2021 | CN | 113255094 A | 13-08-2021 |
| | | EP | 3862870 A1 | 11-08-2021 |
| | | JP | 7508798 B2 | 02-07-2024 |
| | | JP | 2021125172 A | 30-08-2021 |
| | | US | 2021248507 A1 | 12-08-2021 |

EPO FORM P0459

For more details about this annex : see Official Journal of the European Patent Office, No. 12/82

**EP 4 542 453 A1**

**Patent documents cited in the description**

- JP 2023079015 A